(19) Europäisches Patentamt
European Patent Office
Office européen des brevets

(11) Veröffentlichungsnummer: **0 316 968 B1**

(12) **EUROPÄISCHE PATENTSCHRIFT**

(45) Veröffentlichungstag der Patentschrift: **24.06.92**

(51) Int. Cl.[5]: **C01B 3/00**, C01B 6/04

(21) Anmeldenummer: **88121553.7**

(22) Anmeldetag: **20.12.83**

(60) Veröffentlichungsnummer der früheren Anmeldung nach Art. 76 EPÜ: **0 112 548**

# (54) Verfahren zur Herstellung aktiver Magnesiumhydrid-Magnesium-Wasserstoffspeichersysteme.

(30) Priorität: **22.12.82 DE 3247360**

(43) Veröffentlichungstag der Anmeldung: **24.05.89 Patentblatt 89/21**

(45) Bekanntmachung des Hinweises auf die Patenterteilung: **24.06.92 Patentblatt 92/26**

(84) Benannte Vertragsstaaten: **AT BE CH DE FR GB IT LI LU NL**

(56) Entgegenhaltungen:
**FR-A- 2 407 169**
**FR-A- 2 441 652**
**US-A- 4 389 326**

(73) Patentinhaber: **Studiengesellschaft Kohle mbH**
**Kaiser-Wilhelm-Platz 1**
**W-4330 Mülheim/Ruhr(DE)**

(72) Erfinder: **Bogdaovic, Borislav, Dr.**
**Kaiser-wilhelm-Platz 1**
**W-4330 Mülheim/Ruhr(DE)**

(74) Vertreter: **von Kreisler, Alek, Dipl.-Chem. et al**
**Patentanwälte Von Kreisler-Selting-Werner, Deichmannhaus am Hauptbahnhof**
**W-5000 Köln 1(DE)**

**EP 0 316 968 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung aktiver Magnesiumhydrid-Magnesium-Systeme ($MgH_2$-Mg-Systeme), die als reversible Wasserstoffspeichersysteme verwendet werden können.

Von den bekannten Metallhydrid-Metall-Systemen, die als reversible Wasserstoffspeichersysteme infrage kommen, zeichnet sich das $MgH_2$-Mg-System durch den höchsten Gewichtsanteil an reversibel gebundenem Wasserstoff (7,65 Gew.-%) und damit die höchste Energiedichte pro Gewichtseinheit des Speichermaterials aus (2332 Wh/kg; Reilly u. Sandrock, Spektrum der Wissenschaft, April 1980, 53).

Obwohl aus diesem Grunde, wie auch aufgrund des relativ niedrigen Magnesiumpreises, das $MgH_2$-Mg-System als ein optimales Wasserstoffspeichersystem für mobile Zwecke, z.B. für wasserstoffbetriebene Fahrzeuge, erscheint, stand bisher die unbefriedigende Kinetik dieses Systems einer solchen Anwendung im Wege. So ist bekannt, daß sich reines Magnesium nur unter drastischen Bedingungen und auch dann nur sehr langsam und unvollständig hydrieren lässt. Auch die Dehydriergeschwindigkeit des auf diese Weise hergestellten Magnesiumhydrids ist für einen Wasserstoffspeicher nicht akzeptabel (s. z.B. Genossar u. Rudman, Z.F. Phys.Chem., Neue Folge 116, 215 (1979) und die dort zitierte Literatur).

Es wurden daher in den letzten Jahren intensive Bemühungen unternommen, durch Dotierung bzw. Legierung des Magnesiums mit Fremdmetallen (A1, Douglass, Metall. Trans. 6a, 2179 (1975); In, Mintz, Gavra u. Hadari; J.inorg.nucl.Chem. 40, 765 (1978); verschiedene Metalle, DE-OS 28 46 672, 28 46 673; Fe, Welter u. Rudman, Scripta Metallurgica, 16, 285 (1982)) oder mit intermetallischen Verbindungen ($Mg_2Ni$, $Mg_2Cu$, Wiswall, Top.Appl. Phys. 29 201 (1978), Genossar u. Rudman; $LaNi_5$, Tanguy et al. Mater.Res.Bull 11, 1441 (1976)) die Hydrierbarkeit des Magnesiums zu verbessern.

Obwohl auf diesem Wege Verbesserungen bezüglich der Kinetik erzielt werden konnten, sind einige wesentliche Nachteile derartiger Systeme noch nicht ausgeräumt. So erfordern die Ersthydrierungen des mit Fremdmetall bzw. mit der intermetallischen Verbindung dotierten Magnesiums nach wie vor drastische Reaktionsbedingungen und erst nach mehreren Hydrier-/Dehydriercyclen wird die Kinetik dieser Systeme zufriedenstellend und der reversible Wasserstoffgehalt höher. Für die Verbesserung der kinetischen Eigenschaften sind beträchtliche Anteile des Fremdmetalls bzw. der teueren intermetallischen Verbindung notwendig. Außerdem liegen die Speicherkapazitäten dieser Systeme im allgemeinen erheblich unterhalb des für $MgH_2$ theoretisch zu erwartenden Wertes.

Einen wesentlichen Fortschritt bezüglich der Kinetik der $MgH_2$-Mg-Systeme brachte das in der Europäischen Patentschrift 0 003 564 beschriebene Verfahren zur homogenkatalytischen Hydrierung des Magnesiums, in dem man Magnesium in Gegenwart eines Katalysators bestehend aus einem Halogenid eines Metalls der IV. bis VIII. Nebengruppe des periodischen Systems und einer magnesiumorganischen Verbindung bzw. eines Magnesiumhydrids sowie ggfls. in Gegenwart eines policyclischen Aromaten oder eines tertiären Amins sowie ggfls. in Gegenwart eines Magnesiumhalogenids $MgX_2$ mit X = Cl, Br, J, mit Wasserstoff umsetzt.

Die Vorteile dieses Verfahren liegen, abgesehen von den milden Reaktionsbedingungen bei der Ersthydrierung des Magnesiums, vor allem in der überlegenen Kinetik des so erhältlichen Systems bei den nachfolgenden Dehydrier-/Hydriercyclen. Dies äußert sich u.a. dadurch, daß die Beladung des Magnesiums mit Wasserstoff bei nachfolgenden Dehydrier-/Hydriercyclen bereits drucklos oder unter nur wenig erhöhtem Druck und bei tieferen Temperaturen als bei den bekannten Systemen dieser Art (z.B. bei dem Mg-$Mg_2Ni$-System) möglich ist. Die Speicherkapazität der homogenkatalytisch erhältlichen $MgH_2$-Mg-Systeme liegt nahe dem theoretischen Wert.

FR-A-2 441 652 beschreibt ein Verfahren zur Herstellung von Speichersystemen, bei dem metallisches Magnesium in feinverteilter Form mit einem Übergangsmetall in einer Kugelmühle vermahlen wird. Für das Trennagens wird ein Anteil von 1 bis 20 Volumen % angegeben.

Es wurde nun überraschenderweise gefunden, daß sich die Kinetik der $MgH_2$-Mg-Wasserstoffspeichersysteme nach einem neuen Verfahren wirksam verbessern läßt.

Das Verfahren besteht darin, daß Magnesiumhydrid oder metallisches Magnesium in fein verteilter Form durch Kontakt mit einer Lösung eines geeigneten Übergangsmetall-Komplexes bzw. einer geeigneten Übergangsmetall-organischen Verbindung dotiert werden. Dabei wird das jeweilige Übergangsmetall in äußerst feiner Verteilung an der Oberfläche der Magnesiumhydrid- bzw. Magnesiumpartikel ausgeschieden und übernimmt die Rolle des Katalysators bei Dehydrier-und Hydrier-Prozessen.

Außerdem wurde überraschenderweise gefunden, daß die Dotierung des feinverteilten Magnesiums bzw. des Magnesiumhydrids mit Übergangsmetallen zum Zwecke der Herstellung von aktiven Magnesiumhydrid- oder Magnesium-Wasserstoff-Speichersystemen auch mit Hilfe von elementaren Übergangsmetallen in feinverteilter Form auf mechanischem Wege erreicht werden kann.

Ein besonderer Vorteil des Verfahrens unter Anwendung von löslichen Übergangsmetallkomplexen bzw.

von Übergangsmetall-organischen Verbindungen liegt darin, daß bereits geringe Mengen der aufgetragenen Übergangsmetalle unmittelbar oder nach wenigen Dehydrier-Hydrier-Cyclen einen starkten katalytischen Effekt hervorrufen, und daß dieser katalytische Effekt bei fortlaufender Dehydrierung-Hydrierung aufrecht erhalten bleibt; bei dem elektrolytisch an Magnesium ausgeschiedenen Nickel (Eisenberg, Zagnoli u. Sheridan, Journ. Less-Common Metals, 74, 323 (1980) läßt dagegen der katalytische Effekt des Nikkels bereits nach wenigen Hydrier-Dehydriercyclen stark nach. Bei dem vorliegenden Verfahren ist ein Anteil von maximal 3 Gew.-% des betreffenden Übergangsmetalls, bezogen auf Magnesiumhydrid bzw. Magnesium, für das Zustandekommen des gewünschten katalytischen Effektes ausreichend. Die $H_2$-Speicherkapazität der so erhältlichen Systeme ist daher verhältnismässig hoch.

Das erfindungsgemäße Verfahren unter Verwendung von elementaren Übergangsmetallen in feinverteilter Form besteht darin, daß Magnesiummetall in feinverteilter Form und ein geeignetes Übergangsmetall in feinverteilter Form auf mechanischem Wege, z.B. durch Trokken-Vermahlen oder durch Vermahlen in Gegenwart eines organischen Lösungsmittels, in innigen Kontakt gebracht werden, wodurch Magnesium mit dem betreffenden Übergangsmetall dotiert wird.

Geeignete Übergangsmetalle sind die Elemente der IV, bis VII. Nebengruppe des periodischen Systems, z.B. Ti, V, Cr, Mo, W, Fe, Ru, Co, Rh, Ir, Ni, Pd und/oder Pt.

Als bevorzugte Übergangsmetallkomplexe bzw. übergangsmetallorganische Verbindungen nach dem vorliegenden Verfahren gelten komplexe bzw. metallorganische Verbindungen des Nickels, Palladiums und Eisens; von diesen werden besonders bevorzugt Bis(1,5-cyclooctadien)-nickel ($COD_2Ni$), Bis ($\eta^3$-allyl)nickel, Bis(acetylacetonato)nickel, Bis(ethylato)nickel, Phosphannickel-Komplexe und Tetracarbonylnickel verwendet. Die Übergangsmetalle Palladium und Eisen werden bevorzugt in Form von $\eta^3$-Allyl-, $\eta^5$-Cyclopentadienyl-, Olefin-, Phosphan-, Acetylacetonato- oder Carbonylkomplexen als Dotierungsmittel eingesetzt. Es sind jedoch auch Komplexe bzw. metallorganische Verbindungen der Metalle Pt, Co, Rh, Ir, Fe, Ru, Cr, Mo, W, Ti und V zum Dotieren des Magnesiums bzw. Magnesiumhydrids einsetzbar.

Als bevorzugte Übergangsmetalle für die unmittelbare Dotierung des Magnesiums mit elementarem Übergangsmetall gelten Nickel, Palladium und Eisen; von diesen wird besonders Nickel bevorzugt. Es sind jedoch auch die Metalle Pt, Co, Rh, Ir, Ru, Cr, Mo, W, Ti und V zum Dotieren von Magnesium einsetzbar.

In besonderem Maße eignet sich zur Dotierung nach dem vorliegenden Verfahren das homogenkatalytisch nach der Europa-PS 0 003 564 hergestellte Magnesiumhydrid, das dadurch erhalten werden kann, daß man Magnesium in Gegenwart eines Katalysators, bestehend aus einem Halogenid eines Metalls der IV. bis VIII.Nebengruppe des periodischen Systems und einer magnesiumorganischen Verbindung bzw. eines Magnesiumhydrids, sowie ggfls. in Gegenwart eines policyclischen Aromaten oder eines tertiären Amins sowie ggfls. in Gegenwart eines Magnesiumhalogenids $MgX_2$ mit X = Cl, Br, J mit Wasserstoff umsetzt.

Es ist jedoch auch kommerziell erhältliches Magnesiumhydrid einsetzbar, das nach dem erfindungsgemäßen Verfahren durch Dotierung mit einem Übergangsmetallkomplex, z.B. Bis-COD-nickel (Beispiel 9), zu einem Magnesiumhydrid mit guten kinetischen Eigenschaften der Dehydrierung/Hydrierung umgesetzt werden kann.

Die Dotierung unter Verwendung von Übergangsmetallkomplexen oder Übergangsmetall-organischen Verbindungen kann in einem aliphatischen, cycloaliphatischen oder aromatischen Kohlenwasserstoff oder in einem aliphatischen, aromatischen oder cyclischen Ether wie z.B. Tetrahydrofuran (THF), in dem der betreffende Übergangsmetallkomplex bzw. die übergangsmetallorganische Verbindung löslich oder partiell löslich ist, vorgenommen werden. Wie anhand des Beispiels 1 gezeigt wird, kann die Dotierung des homogenkatalytisch hergestellten Magnesiumhydrid mit $COD_2Ni$ in THF in situ in Gegenwart des homogenen Hydrierkatalysators durchgeführt werden, oder die Dotierung kann nach Abtrennung vom Katalysator und THF in einem anderen Lösungsmittel, wie z.B. in Toluol, vorgenommen werden.

Die Dotierung unter Verwendung elementarer Übergangsmetalle wird bevorzugt in einem aliphatischen, cycloaliphatischen oder aromatischen Kohlenwasserstoff durchgeführt.

Die dem Dotierungsverfahren unter Verwendung von Übergangsmetallkomplexen oder Übergangsmetall-organischen Verbindungen zugrunde liegenden chemischen Prozesse können je nach Dotierungsmittel, Lösungsmittel, Reaktionsbedingungen und ggfls. Anwesenheit des Wasserstoffs verschieden sein. Es lassen sich folgende vier Dotierungsreaktionen unterscheiden:

a) Dotierung durch thermische Zersetzung des gelösten Übergangsmetallkomplexes tritt z.B. bei der Dotierung des Magnesiumhydrids mit $COD_2Ni$ in Toluol bei 100-110 °C auf (Beispiel 2)

$$MgH_2 + COD_2Ni \xrightarrow[-2\ COD]{100-110°} MgH_2(Ni) \qquad (1)$$

b) Dotierung durch Hydrierung des Übergangsmetallkomplexes:

Zur Beschleunigung der Dotierung von $MgH_2$ mit $COD_2Ni$ in Toluol bei 20 °C wird in die Toluolsuspension bzw. -lösung Wasserstoff eingeleitet (Beispiel 9). Hierbei kommt es zu einer raschen autokatalytischen Hydrierung des Nickelkomplexes zu Cyclooctan und Nickel, das in feinster Form an $MgH_2$-Partikeln ausgeschieden wird:

$$MgH_2 + COD_2Ni + 4\ H_2 \xrightarrow[-2C_8H_{16}]{20°C} MgH_2(Ni) \qquad (2)$$

Setzt man kommerziell erhältliches Magnesium-Metallpulver zur Dotierung mit einem Übergangsmetall ein, so ist die Menge des reversibel gebundenen Wasserstoffs nicht nur abhängig vom verwendeten Übergangsmetall, sondern auch von der Korngröße des eingesetzten Magnesiumpulvers:

$$Mg + COD_2Ni \xrightarrow[-2C_8H_{16}]{H_2,\ 20°C} MgH_2(Ni) \qquad (2a)$$

So beträgt (Beispiel 4) die reversibel gebundene $H_2$-Menge bei Verwendung von Magnesium (50 mesh) 3,74 Gew.-% $H_2$, während bei Verwendung von feinkörnigem Magnesium (325 mesh, Beispiel 10) eine reversible Wasserstoffaufnahme von 6,5 Gew.-% erreicht wurde, was dem theoretischen Wert relativ nahe kommt.

c) Dotierung durch unmittelbare Reaktion des Magnesiumhydrids mit der zur Dotierung eingesetzten übergangsmetallorganischen Verbindung:

Bei der Dotierung von $MgH_2$ mit z.B. Bis($\eta^3$-allyl)nickel oder Bis($\eta^3$-allyl)palladium in Toluol oder THF kommt es bereits unterhalb der Raumtemperatur zur Abscheidung der Übergangsmetalle auf dem Magnesium unter Entwicklung von Propen und Dehydrierung von Magnesiumhydrid. 70% oder mehr der nach Gleichung 3 bzw. 4 berechneten Propenmenge können hierbei nachgewiesen werden.

$MgH_2$ + 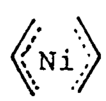 $\longrightarrow$ $Mg(Ni) + 2\ C_3H_6$ (3)

$MgH_2$ + 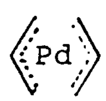 $\longrightarrow$ $Mg(Pd) + 2\ C_3H_6$ (4)

Analog wird auch als Metallpulver zugesetztes elementares Übergangsmetall, z.B. Nickel, auf der Oberfläche des Magnesiumpulvers niedergeschlagen.

d) Dotierung durch Reduktion des Übergangsmetallkomplexes mit Magnesiumhydrid:

Bei der Dotierung von Magnesiumhydrid mit Nickel(II)Komplexen, wie Bis(acetylacetonato)- oder Bis(ethylato)nickel, dient Magnesiumhydrid gleichzeitig als Reduktionsmittel des zweiwertigen Nickels zum nullwertigen Nickel. Durch die Bildung des entsprechenden Magnesiumsalzes geht bei dieser Methode eine dem Nickel(II)-Komplex äquivalente Menge des Magnesiumhydrids als Speichermaterial verloren.

Technische Vorteile der verbesserten kinetischen Eigenschaften der $MgH_2$-Mg-Wasserstoffspeichersysteme ergeben sich dadurch, daß die Beladung mit Wasserstoff bei niedrigeren Drucken und Temperaturen und in kürzeren Zeiten und die Entladung bei niedrigeren Temperaturen und in kürzeren Zeiten als bisher

möglich sind, wodurch Material- und Betriebskosten gesenkt und $H_2$-Speicher in der Handhabung praktikabler und sicherer werden.

Zur Prüfung der Eigenschaften von $MgH_2$-Mg-Proben bei Dehydrier-/Hydrierprozessen wurden die Proben

a) bei Normaldruck einem oder mehreren Dehydrier-/Hydriercyclen unterworfen (Normaldrucktest) und
b) ggfls. bei erhöhtem Druck einer Serie von 30 - 40 oder mehr Dehydrier-/Hydriercyclen (Drucktest) unterzogen.

Für die Durchführung von Normaldrucktests diente die hierfür entwickelte thermovolumetrische Apparatur (Bogdanovic u. Spliethoff, Chem.-Ing.-Tech. 1983, im Druck).

Um die Eigenschaften von $MgH_2$-Mg-Proben als $H_2$-Speicher bei längerem Gebrauch zu untersuchen, wurden die Proben bei wenig erhöhtem Druck (max. 15 bar) einer Serie von Dehydrier-/Hydrier-Cyclen unterworfen. Für die Durchführung der Drucktests wurde eine hierfür entwickelte vollautomatische, elektronisch gesteuerte Apparatur verwendet.

Die Versuche mit den luftempfindlichen $MgH_2$-Mg-Systemen bzw. Metallkomplexen wurden unter Argon durchgeführt. Die Lösungsmittel wurden von Luft und Feuchtigkeit befreit und unter Argon destilliert. Für sämtliche Versuche wurde technischer Wasserstoff (99,9 %) verwendet. Bei der Durchführung der Dehydrier-Hydrier-Cyclen wurde jeweils frischer Wasserstoff aus dem Druckbehälter entnommen.

Beispiel 1

15,0 kg (617 mol) Magnesiumpulver (Korngröße: 0,3 mm, 50 mesh) in 75 l THF wurden in einem Rührkessel nach dem in der Europa-PS 0 003 564 beschriebenen Verfahren unter Verwendung des Titan-Katalysators (Molverhältnis Mg:Anthracen:$TiCl_4$ = 100 : 1 : 1) bei 60 - 73 °C und 2 bar $H_2$-Druck zu Magnesiumhydrid hydriert.

Zur Dotierung mit Nickel wurde die $H_2$-Atmosphäre des Rührkessels gegen eine Argonatmosphäre ausgewechselt. Zu der in situ vorliegenden $MgH_2$-Suspension in THF wurden unter Argon 1,4 kg (5 mol) festes $COD_2Ni$ zugegeben und die Suspension anschließend 4 h unter Rühren auf 100 °C aufgeheizt. Das mit Nickel dotierte Magnesiumhydrid wurde anschließend filtriert, mit THF und Pentan gewaschen und im Vakuum (0,2 - 0,4 mbar) bei 50 °C getrocknet. Zur Befreiung von Resten des organischen Materials wurde das so erhaltene Produkt einem Dehydrier-Hydriercyclus unterworfen (Dehydrierung: 230 bis 370 °C/10 - 0,4 mbar; Hydrierung: 335 bis 350 °C/ 5-10 bar). Erhalten wurden 14,0 kg Magnesiumhydrid als pyrophores, hellgraues Pulver folgender Zusammensetzung:
C 0,0, H 6,ol, Mg 85,17, Ti 1,51, Cl 2,72 und Ni 0,89 %.
Normaldrucktest: Eine 0,72 g-Probe dieses Produktes wurde in der thermovolumetrischen Meßapparatur in $H_2$-Atmosphäre (1 bar) bei 334 °C dehydriert und anschließend bei 230 °C (jeweils Ofentemperatur) hydriert. Die Aufzeichnung dieses Dehydrier-Rehydrier-Cyclus geben die Kurben b der Abb. 1 wieder.

Zum Vergleich geben die Kurven a der Abb. 1 den Verlauf eines Dehydrier-Hydrier-Cyclus einer nach der gleichen Methode (Ti-Katalysator) hergestellten, jedoch nicht dotierten $MgH_2$-Probe (0,69 g) wieder (Dehydrierung: 329 °C/1 bar, Hydrierung: 230 °C/1 bar).

Aus dem Vergleich mit nicht dotiertem $MgH_2$ folgt, daß durch die Dotierung mit Nickel sowohl die Kinetik der Dehydrierung als auch der Hydrierung des homogenkatalytisch hergestellten Magnesiumhydrids wesentlich verbessert wird. Die Dehydrier-Hydrier-Cyclen mit der dotierten $MgH_2$-Probe bei Normaldruck können mehrfach wiederholt werden, wobei nur minimale Verluste in der $H_2$-Kapazität feststellbar sind.

Drucktest:

Eine 19,09 g-Probe des Nickel-dotierten Magnesiumhydrids wurde einer Serie von 42 Dehydrier-Hydrier-Cyclen unterworfen, wobei Hydrierdruck und Hydrierzeiten ($Z_h$) variiert wurden. Die Außentemperatur bei der Dehydrierung ($T_d$) betrug jeweils 367 °C und bei der Hydrierung ($T_h$) 267 °C. Die Angaben über den durchgeführten Drucktest enthält die Tabelle I; in der Abb. 2 oben sind die charakteristischen Wasserstoffabgabe- bzw. -aufnahmekurven der bei 10, 5, 3 und 2 bar $H_2$-Druck durchgeführten Cyclen sowie die dazugehörenden Temperaturkurven der Probe wiedergegeben. Zum Vergleich wurde ein 34 Cyclen-Drucktest unter den gleichen Bedingungen auch mit einer Probe (17,34 g) des mit Hilfe des Titankatalysators hergestellten, nicht dotierten Magnesiumhydrids durchgeführt. Die Daten bzw. die Aufzeichnungen der charakteristischen einzelnen Cyclen des Vergleichstests enthält die Tabelle Ia bzw. die Abb. 2 unten.

Tab. I. Angaben über Drucktests der mit 0,89 % Ni dotierten $MgH_2$-Probe (Beispiel 1)

$T_d$ = 367 °C ; $T_h$ = 267 °C ; Dehydrierzeit ($z_d$) = 1.5 h.

| Cyclus Nr | Dehydrierung $H_2$ [l] | Hydrierung Druck [bar][a] | Hydrierung $z_h$ [h] | Hydrierung $H_2$ [l] | Cyclus Nr | Dehydrierung $H_2$ [l] | Hydrierung Druck [bar][a] | Hydrierung $z_h$ [h] | Hydrierung $H_2$ [l] |
|---|---|---|---|---|---|---|---|---|---|
| 1 | 13,7 | 10 | 2 | 14.8 | 22 | 14.9 | 3 | 2 | 14.5 |
| 2 | 14.8 | " | " | " | 23 | 15.0 | " | " | " |
| 3 | " | " | " | " | 24 | " | " | " | 14.4 |
| 4 | 14.7 | " | " | 14.6 | 25[b] | " | " | " | 14.5 |
| 5[b] | 14.6 | " | " | 14.5 | 26 | " | " | " | " |
| 6 | " | " | " | " | 27 | 14.9 | " | " | 14.4 |
| 7 | " | 2 | 3 | 14.4 | 28 | 15.0 | " | " | 14.5 |
| 8 | 14.7 | " | " | " | 29 | " | " | " | " |
| 9 | " | " | " | " | 30 | 15.1 | " | " | 14.6 |
| 10[b] | 14.6 | " | " | " | 31 | 15.0 | " | " | 14.7 |
| 11 | " | " | " | " | 32 | 15.1 | " | " | " |
| 12 | 14.5 | 5 | 1.5 | " | 33 | 15.0 | " | " | " |
| 13 | 14.7 | " | " | 14.5 | 34 | " | 5 | 1.5 | 14.9 |
| 14 | 14.8 | " | " | " | 35 | 14.9 | " | " | " |
| 15[b] | 14.7 | " | " | " | 36 | " | " | " | 15.0 |
| 16 | 14.6 | " | " | 14.4 | 37 | 15.0 | " | " | 14.9 |
| 17 | 14.7 | 3 | 2 | 14.5 | 38 | " | " | " | " |
| 18 | " | " | " | " | 39 | 14.9 | " | " | " |
| 19 | 14.8 | " | " | " | 40 | 15.1 | " | " | 15 |
| 20 | " | " | " | " | 41 | 14.9 | " | " | " |
| 21 | " | " | " | " | 42 | " | " | " | "[c] |

a) 0 bar = Atmosphärendruck

b) Die Aufzeichnung der Cyclen zeigt die Abb. 2, oben.

c) Reversibler $H_2$-Gehalt nach 42 Cyclen: 6.60 Gew.%; Auswaage: 19.09 g.

Tab. Ia. Angaben über Drucktest der nichtdotierten $MgH_2$-Probe (Beispiel 1).
$T_d$ = 367°C ; $T_h$ = 267°C ; Dehydrierzeit ($z_d$) = 2 h.

| Cyclus Nr | Dehydrierung $H_2$ [l] | Hydrierung Druck [bar][a] | Hydrierung $z_h$ [h] | Hydrierung $H_2$ [l] | Cyclus Nr | Dehydrierung $H_2$ [l] | Hydrierung Druck [bar][a] | Hydrierung $z_h$ [h] | Hydrierung $H_2$ [l] |
|---|---|---|---|---|---|---|---|---|---|
| 1 | 14.0 | 10 | 1 | 14.3 | 18 | 13.4 | 3.5 | 4.5 | 13.8 |
| 2 | 13.6 | " | 1.5 | 14.4 | 19 | " | 10 | 2.5 | 15.0 |
| 3 | 13.5 | " | 2 | " | 20 | " | 3 | 5 | 14.0 |
| 4[b] | 13.6 | " | " | 14.5 | 21 | 13.3 | " | " | 13.8 |
| 5 | " | " | " | " | 22 | 13.2 | " | " | 13.6 |
| 6 | " | 5 | " | 14.0 | 23 | " | " | " | 13.7 |
| 7 | " | " | " | 14.1 | 24 | " | " | " | " |
| 8[b] | " | " | " | " | 25 | 13.2 | " | " | 13.6 |
| 9 | 13.7 | " | " | 14.0 | 26[b] | 13.0 | " | " | " |
| 10 | 13.6 | " | " | 13.9 | 27 | " | " | " | 13.8 |
| 11 | " | " | " | " | 28 | 12.9 | " | " | 13.6 |
| 12 | " | 2 | 6 | 13.6 | 29 | " | " | " | 13.7 |
| 13[b] | 13.3 | " | " | " | 30 | " | 10 | 2 | -[c] |
| 14 | " | " | " | 13.5 | 31 | 13.3 | " | " | - |
| 15 | 13.4 | 3.5 | 4.5 | 14.1 | 32 | " | " | " | - |
| 16 | 13.5 | " | " | " | 33 | " | " | " | - |
| 17 | 13.4 | " | " | 14.0 | 34 | " | " | " | -[d] |

a) 0 bar = Atmosphärendruck
b) Die Aufzeichnung der Cyclen zeigt die Abb. 2, unten.
c) nicht gemessen
d) Reversibler $H_2$-Gehalt nach 34 Cyclen: 6.93 Gew.%; Auswaage: 16.13 g.

Aus den Ergebnissen der beiden Tests geht hervor, daß sich sowohl die dotierte als auch die nichtdotierte homogenkatalytisch hergestellte $MgH_2$-Probe als reversibler Wasserstoffspeicher für niedrige $H_2$-Drucke (2 - 10 bar) eignet. Sowohl die $H_2$-Kapazität als auch die Kinetik bleiben unter diesen Bedingungen während 42 bzw. 34 Cyclen innerhalb der Meßfehler praktisch konstant.

Bezüglich der Kinetik zeigen sich zwischen den beiden Proben jedoch markante Unterschiede zugunsten der dotierten Probe (Abb. 2 oben und unten). Die größten Unterschiede in der Kinetik weisen die Hydrierkurven bei niedrigen Drucken (2 und 3 bar) auf, wobei die Hydrierzeiten der dotierten Probe um einen Faktor von mindestens 3 kürzer sind.

Die geringeren Unterschiede im Hydrierverlauf bei höheren Drucken resultieren daher, daß bei schneller verlaufenden Hydrierungen der Wärmetransport in zunehmendem Maße der geschwindigkeitsbestimmende Faktor wird.

Beispiel 2

218,7 g (0,9 mol) Magnesiumpulver (Korngröße: 0,3 mm, 50 mesh) in 1,1 l THF wurden nach dem in der Europa-PS 0 003 564 beschriebenen Verfahren unter Verwendung des Chromkatalysators (Molverhältnis Mg : Anthracen : $CrCl_3$ = 100 : 1 : 1) bei 60°C und 20 bar zu Magnesiumhydrid hydriert, das Produkt filtriert, mit THF und Pentan gewaschen und im Vakuum (0,2 mbar) bei Raumtemperatur bis zur Gewichtskonstanz getrocknet. Man erhielt 252,2 g $MgH_2$ der Zusammensetzung: C 4,4, H 7,0, Mg 84,2, Cr 0,75 und Cl 2,04 %.

4 Proben von jeweils 21 - 23 g des so erhaltenen Magnesiumhydrids (Proben a - d) wurden in jeweils 300 ml Toluol suspendiert, die Toluolsuspensionen mit verschiedenen Mengen festem $COD_2Ni$ (Tabelle II) versetzt und die Ansätze 15 h bei 100°C gerührt. Anschließend wurden die dotierten $MgH_2$-Proben abfiltriert, mit Toluol und Pentan gewaschen und im Vakuum (0,2 mbar) getrocknet. Eine Probe von nicht dotiertem $MgH_2$ wurde ohne Zugabe von $COD_2Ni$ in der gleichen Weise in Toluol bei 100°C thermisch behandelt (Probe e).

Tabelle II

| Dotierung von $MgH_2$ mit $COD_2Ni$ in Toluol bei 100°C | | | | | | | | | | |
|---|---|---|---|---|---|---|---|---|---|---|
| Probe | $MgH_2$ [g] | $COD_2Ni$ [g] | $MgH_2$ (dotiert) [g] | Ni%[a] ber. | Zusammensetzung der dot. Proben[%] | | | | | |
| | | | | | Ni | C | H | Mg | Cl | Cr |
| a | 22.4 | 15.0 | 20.2 | 12.5 | 12.8 | 6.0 | 6.1 | 73.5 | 0.46 | [b] |
| b | 21.7 | 3.3 | 21.6 | 3.1 | 3.3 | 5.6 | 6.5 | 83.5 | 0.42 | [b] |
| c | 21.2 | 0.74 | 20.8 | 0.7 | 0.8 | 4.9 | 6.9 | 85.4 | 0.39 | [b] |
| d | 23.0 | 0.08 | 22.3 | 0.07 | 0.07 | 4.8 | 7.0 | 87.2 | 0.31 | [b] |

[a] Bei 100% Dotierung;
[b] nicht bestimmt

Normaldrucktest:

Die mit Nickel dotierten $MgH_2$-Proben a - d wurde, wie in Beispiel 1 beschrieben, einem Dehydrier-Hydrier-Cyclus unterworfen. Aus den Ergebnissen des Normaldrucktests geht hervor, daß eine wesentliche Verbesserung der Hydrierkinetik bereits durch Dotierung mit 0,8 % Ni (Probe c) erreicht wird. Bei Dotierung mit noch größeren Ni-Mengen (Probe a bzw. b) führt dies zu einer nur unerheblichen weiteren Verbesserung der Hydrierkinetik.

Normaldrucktest bei verschiedenen Temperaturen:

0,79 g der Probe b (3,3 % Ni) und 0,65 g der nicht dotierten $MgH_2$-Probe (Probe e) wurden bei 330°C und Normaldruck dehydriert. Die so erhaltenen Proben von "aktivem Magnesium" wurden im Temperaturbereich von 100 bis 283°C und 1 bar ($H_2$-Druck) hydriert. Wie aus den Ergebnissen dieses Tests hervorgeht, lassen sich beide Proben bei Normaldruck bereits ab ca. 150°C mit merklicher Geschwindigkeit hydrieren. Die Hydriergeschwindigkeiten steigen mit Erhöhung der Temperatur an und erreichen bei beiden Proben ein Maximum bei 250 255°C. Bei weiterer Temperaturerhöhung sinken die Hydriergeschwindigkeiten naturgemäß ab, da sich die Systeme ihrem Gleichgewichtszustand (284°C, 1 bar) annähern. Aus dem Vergleich der beiden Proben geht hervor, daß die dotierte Probe in dem gesamten untersuchten Temperaturbereich eine erheblich bessere Hydrierkinetik aufweist.

"Zündungsversuche" mit einer Ni-dotierten Proben von "aktivem Magnesium" bei verschiedenen $H_2$-Drucken:

Die Probe b (3,3 % Ni) wurde bei 330 °C/1 bar dehydriert. Jeweils 11,0 g des so erhaltenen "aktiven Magnesiums" wurden in einem 300 ml Autoklaven bei verschiedenen $H_2$-Drucken hydriert. Hierbei wurde der Autoklav mit einer konstanten Aufheizgeschwindigkeit von 2 °C/min. aufgeheizt und die Temperatur im Inneren der jeweiligen Probe gemessen. Bei einem $H_2$-Druck von 10 oder 15 bar liegt die "Zündungstemperatur" der Probe bei ca 150 °C. In den nächsten 30 min. heizt sich die Probe durch die Hydrierwärme kurzzeitig bis auf 380 - 390 °C auf, und nach weiteren 10 min. ist der Hydriervorgang praktisch beendet. Bei geringeren $H_2$-Drucken (0,7 oder 2 bar) liegt die Zündungstemperatur naturgemäß höher (190 - 200 °C) und während der Hydrierung wird eine Temperatur von maximal 270 - 290 °C erreicht. Die maximal erreichbare Hydriertemperatur ist somit durch Vorgabe des $H_2$-Druckes voreinstellbar, da sie die dem $H_2$-Druck entsprechende Gleichgewichtstemperatur nicht überschreiten kann.

## Beispiel 3

72, 3 g (3,0 mol) Magnesiumpulver (Korngröße: 0,3 mm, 50 mesh) in 0,35 1 THF wurden nach dem in der Europa-PS 0 003 564 beschriebenen Verfahren unter Verwendung eines Titankatalysators (Molverhältnis Mg : Anthracen : $TiCl_4$ = 200 : 1 : 1) bei 60 °C und 80 bar zu Magnesiumhydrid hydriert, das Produkt filtriert, mit THF und Pentan gewaschen und im Hochvakuum bei RT bis zur Gewichtskonstanz getrocknet. Man erhielt 80,0 g Produkt der Zusammensetzung: C 3,09, H 7,40, Mg 86,86, Ti 0,59 und Cl 1,42 % (Probe f).

Eine 11,35 g-Probe des so hergestellten Magnesiumhydrids wurde in 100 ml Toluol suspendiert, die Suspension mit 0,90 g $COD_2Ni$ versetzt und 5 h bei 100 °C gerührt. Das dotierte Magnesiumhydrid wurde filtriert, mit Toluol und Pentan gewaschen und im Hochvakuum bei RT getrocknet. Man erhielt 11,18 g Produkt der Zusammensetzung: C 2,90, H 6,79, Mg 86,10, Ni 1,54, Ti 0,59 und Cl 1,01 % (Probe g).

Normaldrucktest:

Aus dem Ergebnis des Normaldrucktests geht hervor, daß die dotierte Probe (Probe g) sowohl im Hinblick auf die Kinetik als auch auf die Reversibilität wesentlich bessere Eigenschaften als $H_2$-Speicher als die nichtdotierte Probe (Probe f) besitzt. Nach 2 - 3 Dehydrier-Hydrier-Cyclen wird die bei 330 °C abgegebene $H_2$-Menge bei 230 °C vollständig wiederaufgenommen.

## Beispiel 4

300,0 g (12,3 mol) Magnesiumpulver (Korngröße: 0,3 mm, 50 mesh) wurden in Vakuum ausgeheizt, in 1 l Toluol suspendiert und die Suspension mit 27,7 g (0,1 mol) $COD_2Ni$ versetzt. In die gelbe Toluollösung mit dem darin suspendierten Mg-Pulver wurde bei RT und unter Rühren Wasserstoff (1 bar) bis zur Entfärbung der Toluollösung eingeleitet (ca. 2 h). Das dotierte Mg-Pulver wurde filtriert, mit Pentan gewaschen und im Vakuum getrocknet. Erhalten wurden 304,2 g des mit 2 % Ni dotierten Mg-Pulvers.

Drucktest:

Eine 15,0 g-Probe des Ni-dotierten Magnesiumpulvers wurde einer Serie von 66 Hydrier-Dehydrier-Cyclen unterworfen, wobei Hydrierdruck, Hydriertemperatur ($T_h$) und Hydrierzeit ($Z_h$) variiert wurden. Die Autoklaventemperatur bei der Dehydrierung ($T_d$) betrug jeweils 366 °C und die Dehydrierzeit ($Z_d$) 1 h. Die Angaben über den durchgeführten Drucktest enthält die Tabelle III.

Tab. III. Angaben über Drucktest der mit 2% Ni dotierten Magnesiumpulver-Probe (Beispiel 4). $T_d$ = 366°C; Dehydrierzeit ($Z_d$) = 1 h.

| Cyclus Nr | $T_h$ [°C] | Hydrierung Druck [bar][a] | $Z_h$ [h] | $H_2$ [l][b] | Dehydrierung $H_2$ [l][b] |
|---|---|---|---|---|---|
| 1 | 338 | 15 | 9 | 9.6 | 8.8 |
| 2-4 | " | " | 2 | 5.4 | 4.5 |
| 5-6 | 264 | " | 1 | - | " |
| 7-41 | 338 | " | " | 6.4 | 5.7 |
| 42-54 | 264 | " | " | 6.1 | 5.8 |
| 55-60 | " | 5 | 2 | 6.5 | 6.6 |
| 61-62 | " | 15 | 1 | 5.6 | 5.7 |
| 63 | " | " | 3 | - | 5.8 |
| 64-65 | 338 | " | 6 | 8.1 | 7.6 |
| 66 | " | " | 2 | 6.3[c] | |

a) 0 bar = Atmosphärendruck

b) 20°C/1 bar

c) Auswaage 15.6 g $MgH_2$ mit 3.74 Gew.% $H_2$ (nach Normaldrucktest)

In den Abb. 3 und 4 oben sind der Verlauf der Hydrierung der ersten drei Cyclen bzw. der Verlauf der 20 - 23. Hydrier-Dehydrier-Cyclen bei Hydriertemperatur von 338 °C und 15 bar $H_2$-Druck sowie die dazugehörenden Temperaturkurven der Proben wiedergegeben. Die Abb. 5 oben zeigt die entsprechenden Kurven der 55. - 58. Cyclen derselben Probe bei einer Hydriertemperatur von 264 °C und 5 bar $H_2$-Druck. Zum Vergleich wurde eine 31 Cyclen dauernder Drucktest unter den analogen Bedingungen auch mit einer 15,1 g-Probe des nichtdotierten Magnesiumpulvers (Fa. Ventron, 50 mesh) durchgeführt. Die Daten bzw. die Aufzeichnungen der entsprechenden Cyclen des Vergleichstests enthält die Tabelle IIIa bzw. die Abb. 3, 4 und 5 unten.

Der Vergleich der Kurven der Abb. 3, 4 und 5 oben und unten zeigt drastische Unteschiede im kinetischen Verhalten zwischen den beiden Proben zugunsten der Nidotierten Probe. Diese Unterschiede sind stark ausgeprägt sowohl bei den Anfangs- (Abb. 3) als auch bei den nachfolgenden Hydrier-Dehydrier-Cyclen (Abb. 4). Besonders starke Unterschiede in der Kinetik der Hydrierung zugünsten der dotierten Probe treten bei niedrigeren Drucken (5 bar, Abb. 5) auf, wobei die dotierte Probe, trotz der niedrigeren Außentemperatur, eine hoch überlegene Kinetik zeigt.

Tab. IIIa. Angaben über Drucktest der nichtdotierten Magnesiumpulver-Probe (Beispiel 4).

$T_h$ = 338°C; $T_d$ = 366°C; Dehydrierzeit ($Z_d$) = 2 h.

| Cyclus Nr | Hydrierung Druck [bar][a] | $Z_h$ [h] | $H_2$ [l][b] | Dehydrierung $H_2$ [l][b] |
|---|---|---|---|---|
| 1 | 15 | 9 | - | ≈0.2 |
| 2 | " | 7 | 6.2 | 5.8 |
| 3 | " | 2 | 4.8 | 4.9 |
| 4 | " | " | 5.5 | 5.3 |
| 5 | " | " | 5.9 | 5.9 |
| 6 | " | " | 6.2 | 6.4 |
| 7 | " | " | 6.4 | 6.5 |
| 8 | " | " | 6.6 | 6.7 |
| 9 | 5 | 10 | 8.0 | 8.1 |
| 10 | " | " | 8.4 | 8.2 |
| 11-31 | 15 | 2 | 7.4-8.1 | 7.3-8.1 |

a) 0 bar = Atmosphärendruck

b) 20°C/1 bar

Beispiel 5

19,2 g des gemäß Beispiel 2 hergestellten (nichtdotierten) Magnesiumhydrids wurden in 200 ml Toluol nach Zugabe von 1,79 g Nickeltetracarbonyl in 5 ml Toluol 8 h auf 100°C erhitzt (Rückflußkühler: Aceton/Trockeneis). Die Suspension wurde filtriert und das dotierte Magnesiumhydrid mit Toluol und Pentan gewaschen und im Vakuum (0,2 mbar) getrocknet. Erhalten wurden 20,0 g Produkt der Zusammensetzung C 6,03, H 6,48, Mg 80,60, Ni 2,60 und Cl 1,11%. Die so erhaltene $MgH_2$-Probe zeigte verbesserte kinetische Eigenschaften im Normaldrucktest im Vergleich zur nichtdotierten $MgH_2$-Probe.

Beispiel 6

24,0 g (1,0 mol) Magnesiumpulver (Korngröße: 0,3 mm, 50 mesh) in 150 ml THF wurden nach dem in

der Europa-PS 0 003 564 beschriebenen Verfahren unter Verwendung des Chromkatalysators (Molverhältnis Mg : Anthracen : $CrCl_3$ = 100 : 1 : 1) bei 20 - 24 °C und 80 - 100 bar zu Magnesiumhydrid hydriert, das Produkt filtriert, mit THF und Pentan gewaschen und im Hochvakuum bei RT bis zur Gewichtskonstanz getrocknet. Man erhielt 27,0 g $MgH_2$ der Zusammensetzung C 6,66, H 6,64, Mg 82,64, Cr 1,21 und Cl 2,95 % (Probe h).

1,19 g der Probe h wurden in einem an eine Kühlfalle angeschlossenen und mit einem Tropftrichter versehenen 25 ml-Kolben vorgelegt. Die Apparatur wurde evakuiert und zu der Probe bei RT unter Rühren aus dem Tropftrichter eine Lösung von 0,42 g (3,0 mmol) Bis($\eta^3$-allyl)nickel in 4,0 ml Toluol zugegeben. Die dabei entstehenden Gase wurden in der Kühlfalle (fl. $N_2$) kondensiert. Nach 2,5 h Reaktionszeit wurde die Kühlfalle aufgetaut, wobei 60 ml Gas (20 °C, 1 bar) mit 98,5 % Propen und 1,5 % Propan (jeweils Mol-%, MS-Analyse) entstand. Nach weiteren 60 h Reaktionszeit bei RT wurde in der gleichen Weise die Bildung von weiteren 43 ml Gas (20 °C, 1 bar) mit 95,9 % Propen und 4,0 % Propan festgestellt. Insgesamt wurden bei der Reaktion von $MgH_2$ mit Bis($\eta^3$-allyl)nickel 70 % der Allylgruppen als Propen, 11,4 % als Propan und 0,4 % als Hexadien-1,5 nachgewiesen. Das Lösungsmittel (Toluol) wurde im Vakuum abgedampft und der Rückstand im Hochvakuum bei RT getrocknet. Elementarzusammensetzung: C 9,09, H 6,11, Mg 69,94, Ni 12,90, Cr 0,53 und Cl 1,20 %. Die so erhaltene, mit Ni dotierte $MgH_2$-Probe zeigt im Vergleich zur nichtdotierten Probe (Probe h) verbesserte kinetische Eigenschaften beim Normaldrucktest.

Besipiel 7

1,38 g der $MgH_2$-Probe h (s. Beispiel 6) in 5 ml Toluol wurden wie in Beispiel 6 beschrieben bei RT mit 0,39 g (2,1 mmol) Bis( $\eta^3$-allyl)palladium dotiert. Bei der Reaktion von $MgH_2$ (Probe h) mit Bis($\eta^3$-allyl)-palladium wurden 72,6 % der Allylgruppen als Propen, 1,2 % als Propan und 2,4 % als Hexadien-1,5 nachgewiesen. Zusammensetzung des Pd-dotierten Magnesiumhydrids: C 6,34, H 5,90, Mg 72,88, Pd 13,07, Cr 0,47 und Cl 1,13 %. Die mit Palladium dotierte $MgH_2$-Probe zeigt beim Normaldrucktest verbesserte kinetische Eigenschaften im Vergleich zur nichtdotierten Probe (Probe h).

Beispiel 8

2,59 g der $MgH_2$-Probe h (Beispiel 6) wurde in 20 ml Toluol suspendiert und bei -78 °C mit einer -78 °C kalten Lösung von 0,22 g (1,25 mmol) Tris($\eta^3$-allyl)eisen in 20 ml Toluol versetzt. Unter Rühren ließ man die Temperatur der Mischung innerhalb von 8 h von -78 °C auf -6 °C ansteigen, anschließend wurde 24 h bei RT gerührt. Das mit Fe dotierte $MgH_2$ wurde filtriert, mit Toluol und Pentan gewaschen und im Hochvakuum getrocknet. Zusammensetzung des Fe-dotierten Magnesiumhydrids: C 9,45, H 7,13, Mg 78,19, Fe 1,98, Cr 0,45 und Cl 2,56 %. Die mit Eisen dotierte $MgH_2$-Probe zeigt beim Normaldrucktest verbesserte kinetische Eigenschaften im Vergleich zur nichtdotierten Probe (Probe h).

Beispiel 9

Zu 19,45 g Magnesiumhydrid (Fa. Alpha Products) in 100 ml Toluol wurden 1,86 g (6,8 mmol) $COD_2Ni$ zugegeben und in die Lösung bzw. Suspension bei RT und unter Rühren Wasserstoff (1 bar) eingeleitet. Innerhalb von 1,6 h wurden 630 ml $H_2$ (20 °C, 1 bar) aufgenommen (ber. für die Hydrierung von COD 649 ml), wonach die Wasserstoffaufnahme deutlich langsamer wurde. Im Verlauf von weiteren 2,5 h wurden 230 ml $H_2$ (20 °C, 1 bar) aufgenommen (Hydrierung von Toluol), danach wurde die Hydrierung abgebrochen. Die Suspension wurde filtriert, das dotierte Magnesiumhydrid mit Toluol und Pentan gewaschen und im Hochvakuum getrocknet. Erhalten wurden 19,90 g Produkt der Zusammensetzung C 0,39, H 4,95, Mg 84,02 und Ni 1,89 %. Die dotierte $MgH_2$-Probe zeigte beim Normaldrucktest und Drucktest wesentlich verbesserte kinetische Eigenschaften im Vergleich zur nichtdotierten $MgH_2$-Probe (Alpha-Products).

Beispiel 10

50,0 g (2,06 mol) Magnesiumpulver (Alfa Products, 325 mesh) wurden in 150 ml Toluol suspendiert und die Suspension mit 4,77 g (17,4 mmol) $COD_2Ni$ versetzt. In die gelbe Toluollösung mit dem darin suspendierten Mg-Pulver wurde bei RT und unter Rühren Wasserstoff (1 bar) aus einer automatisch registrierenden Gasbürette (Chem. Ing.Techn. loc.cit.) bis zum scharfen Knick in der Wasserstoffaufnahmekurve, nach Aufnahme von 1,70 l $H_2$ (20 °C/1bar) (102 % d.Th.) eingeleitet. Dauer der Hydrierung: 1 h. Das dotierte Mg-Pulver wurde filtriert, mit Pentan gewaschen und im Vakuum getrocknet. Erhalten wurden 50,5 g des mit Nickel dotierten Mg-Pulvers.

Drucktest: Eine 14,7 g-Probe des so erhaltenen Mg-Pulvers wurde einer Serie von 35 Hydrier-Dehydrier-Cyclen unterworfen, wobei Hydrierdruck und Hydrierzeit ($Z_h$) variiert wurden. Die Autoklaventemperatur bei den Dehydrierungen ($T_d$) betrug 362 ° C und bei den Hydrierungen 264 ° C; die Dehydrierzeit ($Z_d$) war auf 1 h festgelegt. Mit Aufnahme der ersten Hydrierung, die bei 337 ° C (Autoklaventemperatur) und 15 bar durchgeführt wurde und ca 4 h dauerte, betrugen die "effektiven Hydrierzeiten" (die Zeit bis die jeweilige $H_2$-Aufnahme durch das aktive magnesium praktisch zum Stillstand kam) bei 1, 2, 3, 5 bzw. 15 bar ($H_2$-Überdruck) 1,2, 0,9, 0,8, 0,6 bzw. 0,4 h, wobei die Temperatur im Inneren der Probe jeweils biz zu der dem vorgegebenen $H_2$-Druck entsprechenden Gleichgewichtstemperatur anstieg. Die effektiven Dehydrierzeiten bei den Dehydrierungen betrugen 0,6 h, wobei die Temperatur im Inneren der Probe unter 300 ° C sank. Der reversible Wasserstoffgehalt bei den Hydrier-Dehydrier-Cyclen betrug, je nach Hydrierdruck und -dauer, 11,3 - 12,6 l (20 ° C/1 bar), entsprechend 6,0 - 6,6 Gew.-% bezogen auf $MgH_2$. Ein 22 Cyclen dauernder Drucktest unter den gleichen Bedingungen wurde auch mit einer 15,0 g-Probe des nichtdotierten Magnesiumpulvers (Alfa Products, 325 mesh) durchgeführt. Der Vergleich der beiden Tests zeigte drastische Unterschiede im kinetischen Verhalten der beiden Proben zugunsten der Ni-dotierten Probe: die Ersthydrierung verlief um einen Faktor von mindestens 3 und die nachfolgenden Hydrierungen bei 5 bzw. 3 bar um einen Faktor von mindestens 10 bzw. 15 schneller als die Hydrierung der nichtdotierten Probe. Der reversible Wasserstoffgehalt der nichtdotierten Probe betrug, je nach Hydrierdruck und -dauer, 6,3 - 6,8 Gew.-%, bezogen auf $MgH_2$.

Beispiel 11

29,4 g Magnesiumpulver (maximale Korngröße von 50 µm, 270 mesh, Fa. Hoechst) und 0,60 g Nickelpulver (Inco Co.) in 200 ml Toluol wurden 16 Stunden unter Argon in einer Glaskugelmühle vermahlen. Das Metallpulver wurde abfiltriert, mit Pentan gewaschen und im Vakuum (0,2 mbar) getrocknet. Erhalten wurden 27,3 g eines nichtpyrophoren, mit ca. 2 Gew.-% Nickel dotierten Magnesiumpulvers.

Zur Verwendung als Wasserstoffspeichermaterial wurden 16,2 g dieses Pulvers in einer hierfür entwikkelten, automatischen Hydrier-Dehydrier-Apparatur zunächst 21 Stunden bei 266 ° C und 15 bar Wasserstoffdruck hydriert und anschließend bei 344 ° C (Autoklaventemperatur) dehydriert (Abgabe 8,2 l $H_2$; 20 ° C, 1 bar). Bei dem zweiten Hydriercyclus unter den gleichen Hydrierbedingungen war die Wasserstoffaufnahme bereits nach 3 Stdn. praktisch beendet, wobei sich die Probe kurzzeitig bis auf 390 ° C erwärmte und eine Wasserstoffaufnahme von 6,7 Gew.-% (bez. auf $MgH_2$) festgestellt wurde. Bei den folgenden 32 Hydrier-Dehydrier-Cyclen (4 H-D-Cyclen bei 15 bar, 10 H-D-Cyclen bei 3 bar, 7 H-D-Cyclen bei 1 bar, 6 H-D-Cyclen bei 5 bar und 5 H-D-Cyclen bei 10 bar (jeweils $H_2$-Überdruck); Hydrier- bzw. Dehydriertemperatur des Autoklaven 266 ° C bzw. 349 ° C; Hydrier bzw. Dehydrierzeit 2 bzw. 1,5 Stdn.) blieb die Kinetik der Wasserstoffaufnahme bzw. -Abgabe und die Wasserstoffspeicherkapazität des Speichermaterials praktisch unverändert (Wasserstoffabgabe bei dem letzten Dehydriercyclus 7,0 Gew.-% bez. auf $MgH_2$).

## Patentansprüche

1. Verfahren zur Herstellung aktiver, reversibel $H_2$ aufnehmender Magnesiumhydrid-Magnesium-Wasserstoff-Speichersysteme durch Vermahlen von metallischem Magnesium in fein verteilter Form mit einem Übergangsmetall aus der IV. bis VIII. Nebengruppe des Periodensystems, dadurch gekennzeichnet, daß das Übergangsmetall in einem Anteil von bis zu 3 Gew.-% eingesetzt wird, wobei das Vermahlen in Gegenwart eines unpolaren organischen Lösungsmittels erfolgt.

2. Verfahren nach Anspruch 1, dadurch gekennzeichnet, daß als Übergangsmetall Nickel eingesetzt wird.

3. Verfahren nach Anspruch 1 oder 2, dadurch gekennzeichnet, daß das Lösungsmittel Toluol ist.

4. Verfahren nach Ansprüchen 1 bis 3, dadurch gekennzeichnet, daß das Vermahlen in einer Glaskugelmühle erfolgt.

## Claims

1. A method of preparing active magnesium hydride/magnesium/hydrogen storer systems which can reversibly take up $H_2$ by grinding of metallic magnesium in finely divided form with a transition metal from sub-group IV to VIII of the periodic table, characterised in that the transition metal is used in a proportion of up to 3% by weight, grinding being carried out in the presence of a non-polar organic

solvent.

2. A method according to claim 1, characterised in that nickel is used as a transition metal.

3. A method according to claim 1 or 2, characterised in that the solvent is toluene.

4. A method according to claims 1 to 3, characterised in that grinding is carried out in a glass ball mill.

**Revendications**

1. Procédé de préparation de systèmes actifs d'accumulation de l'hydrogène à base d'hydrure de magnésium et de magnésium, pouvant absorber le $H_2$ d'une manière réversible, par broyage de magnésium métallique sous une forme finement divisée avec un métal de transition appartenant aux groupes secondaires IV à VIII du Tableau Périodique, caractérisé en ce que le métal de transition est utilisé en une quantité allant jusqu'à 3 % en poids, le broyage étant effectué en présence d'un solvant organique epolaire.

2. Procédé selon la revendication 1, caractérisé en ce que le métal de transition est le nickel.

3. Procédé selon la revendication 1 ou 2, caractérisé en ce que le solvant est le toluène.

4. Procédé salon les revendications 1 à 3, caractérisé en ce que le broyage est réalisé dans un broyeur à billes de verre.

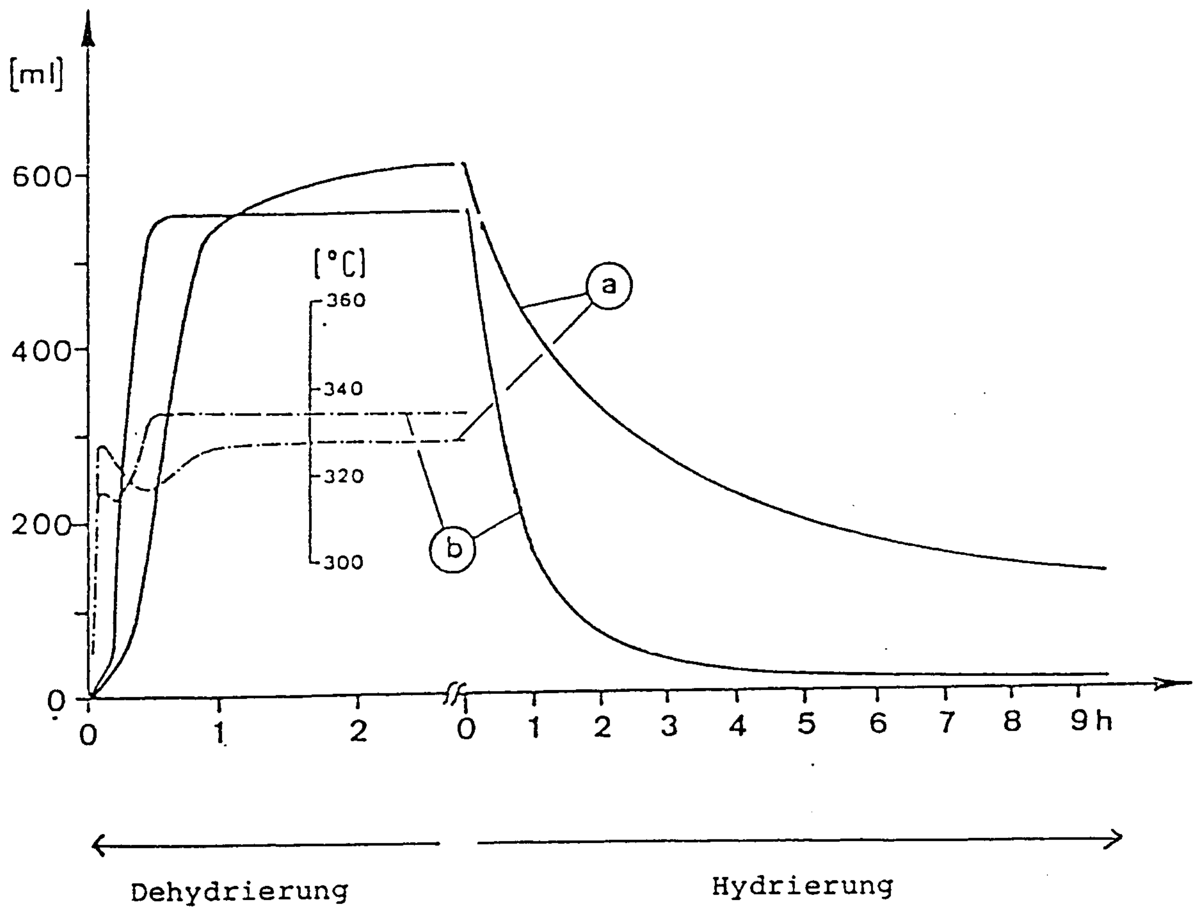


Fig. 1

_____________ = Gasvolumen in der Bürette

-.-.-.-.-.-.= Temperatur der Probe

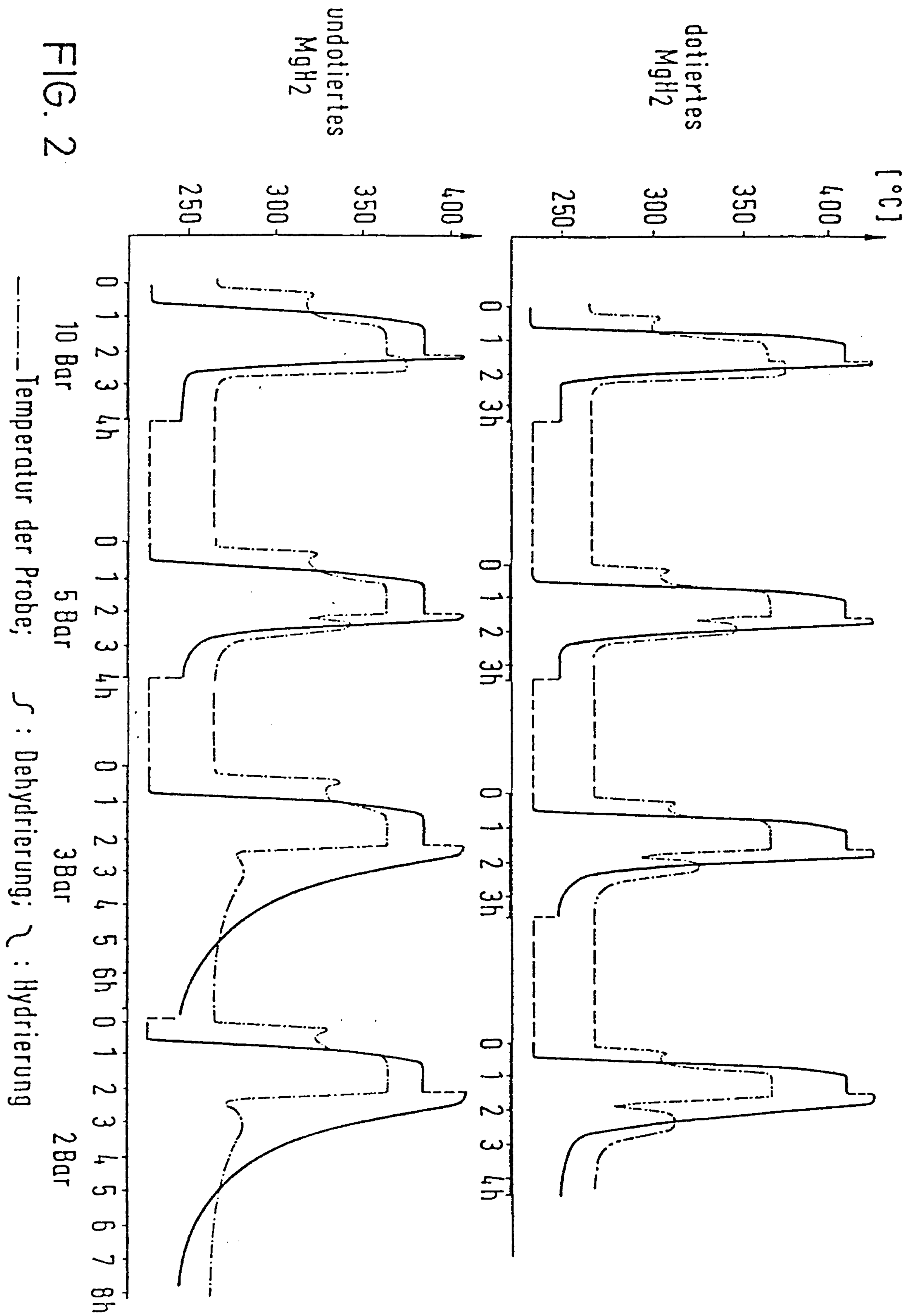
dotiertes MgH2
undotiertes MgH2
[°C]
400
350
300
250
0 1 2 3h
0 1 2 3 4h
10 Bar
5 Bar
3Bar
2Bar
0 1 2 3 4 5 6h
0 1 2 3 4 5 6 7 8h
Temperatur der Probe;
: Dehydrierung;
: Hydrierung

FIG. 2

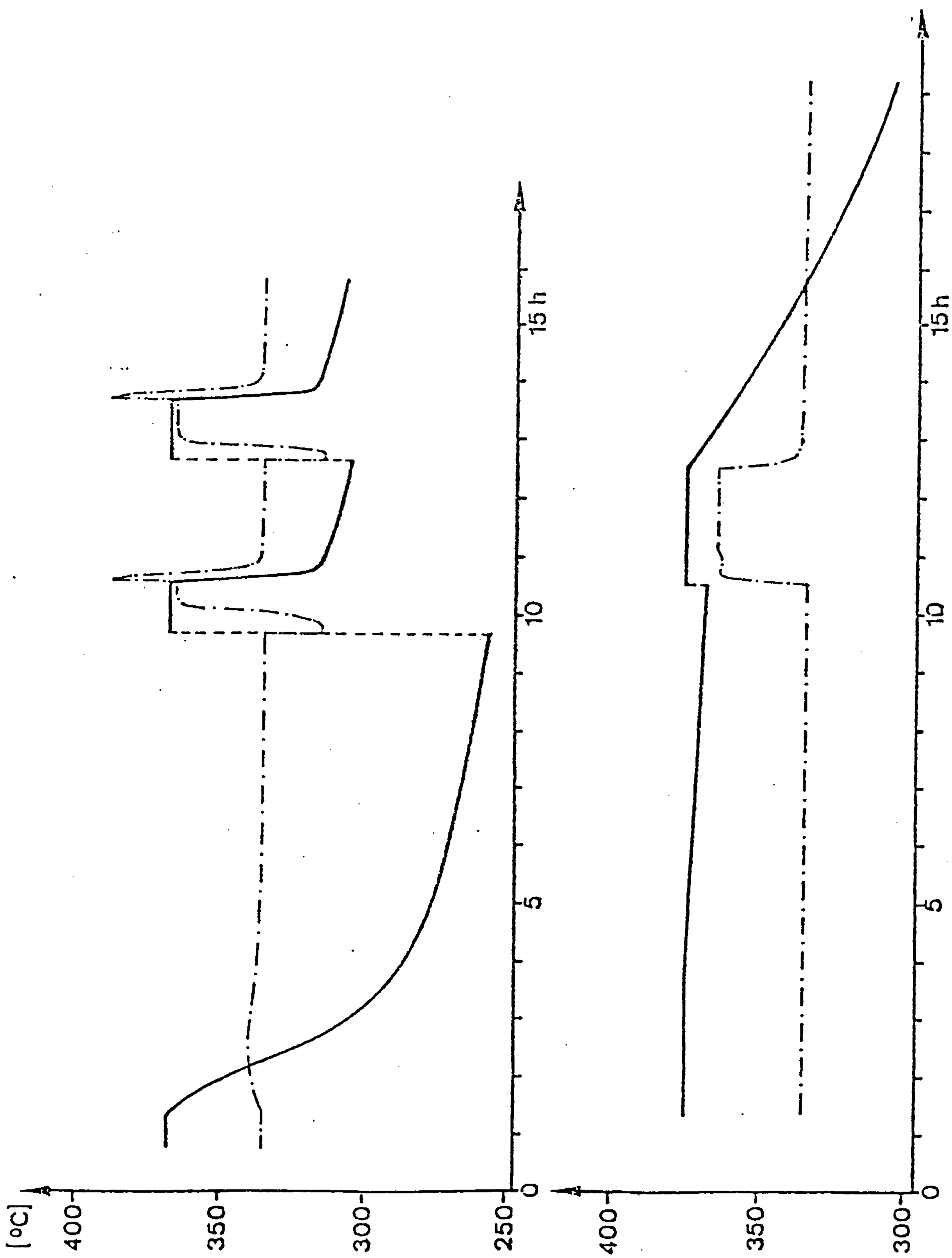


Fig.3. Beispiel 4; –·–·– Temperatur der Probe; ⌐: Hydrierung.

oben: die ersten 3 Hydrierungen der dotierten Probe; $T_h$ = 338 °C, 15 bar.

unten: die ersten 2 Hydrierungen der nichtdotierten Probe; $T_h$ = 338 °C, 15 bar.

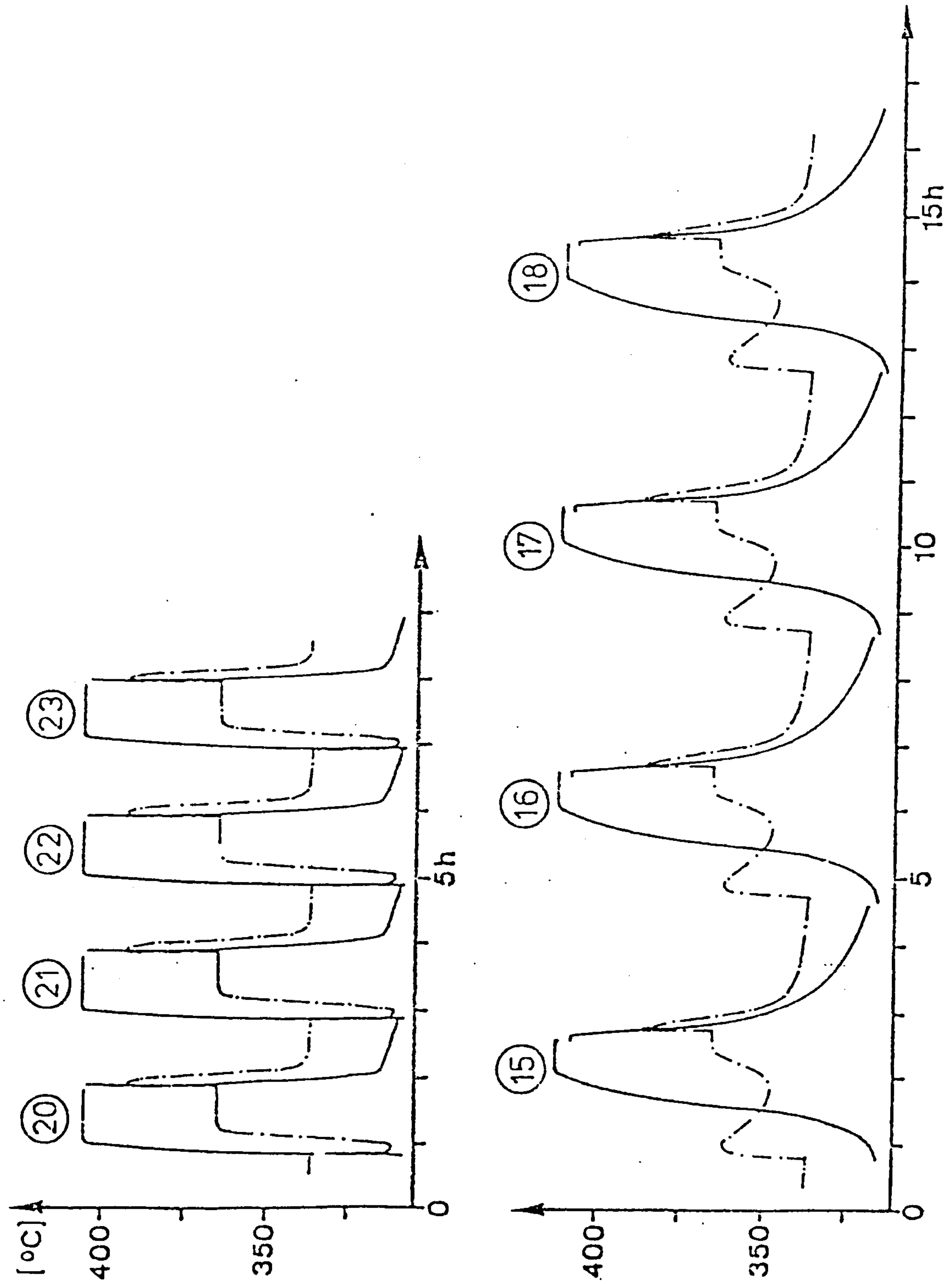


Fig.4 . Beispiel 4; –·–·–Temperatur der Probe; ʃ: Dehydrierung
ʅ: Hydrierung.
oben: dotierte Probe; $T_h$ = 338°C, 15 bar.
unten: nichtdotierte Probe; $T_h$ = 338°C, 15 bar.

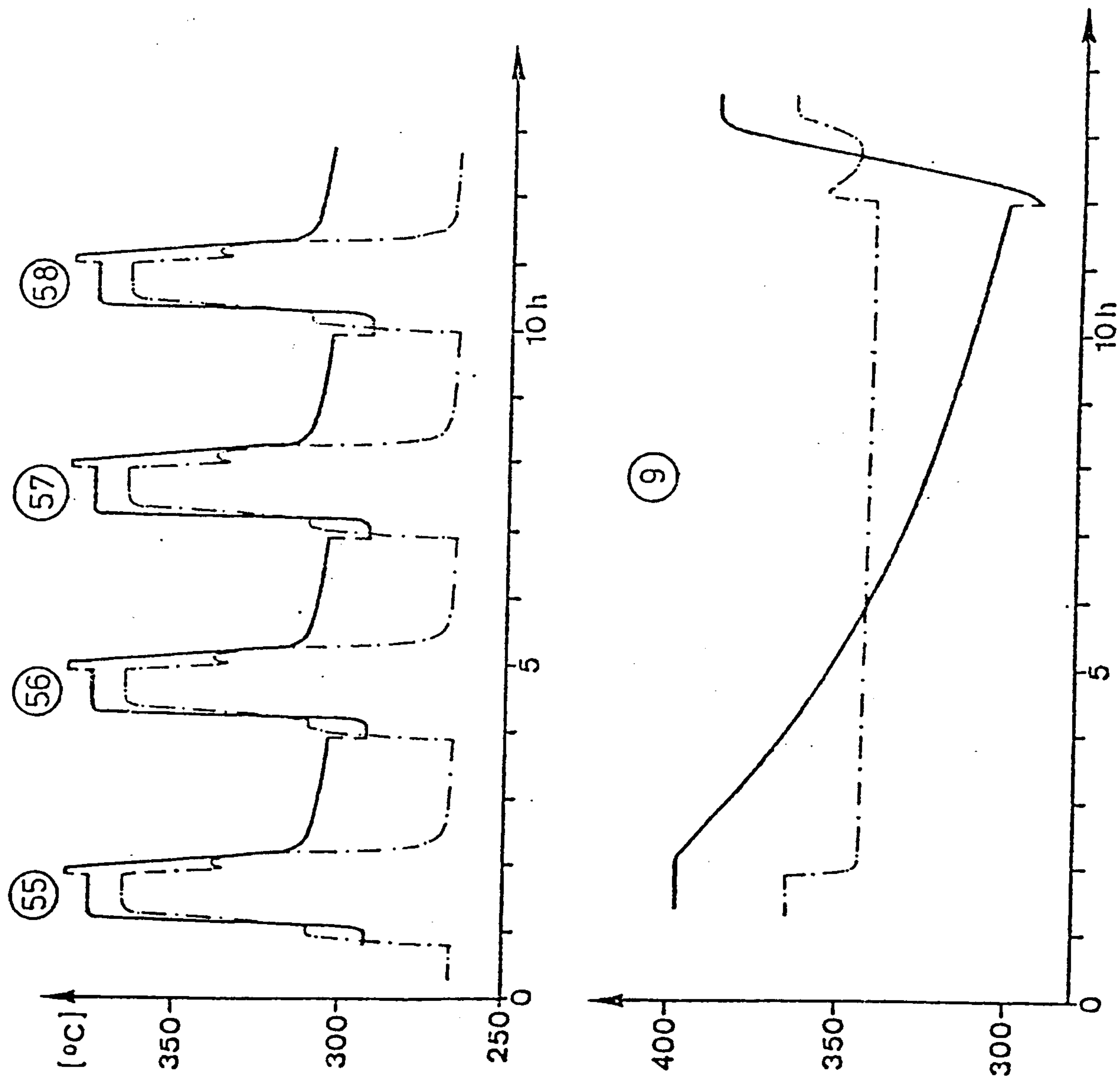


Fig. 5 Beispiel 4; -·-·- Temperatur der Probe; ʃ: Dehydrierung; ʅ: Hydrierung.
oben: dotierte Probe; $T_h = 264^{\circ}C$, 5 bar.
unten: nichtdotierte Probe; $T_h = 338^{\circ}C$, 5 bar.